(19) Europäisches Patentamt
European Patent Office
Office européen des brevets

(11) **EP 2 800 102 B1**

(12) **EUROPEAN PATENT SPECIFICATION**

(45) Date of publication and mention
of the grant of the patent:
**23.05.2018 Bulletin 2018/21**

(51) Int Cl.:
***H01B 1/20*** *(2006.01)*     ***C09J 9/02*** *(2006.01)*

(21) Application number: **14166692.5**

(22) Date of filing: **30.04.2014**

(54) **Self-adhesive conductive layer**

Selbstklebende leitfähige Schicht

Couche conductive autoadhésive

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2013 SE 1350532**

(43) Date of publication of application:
**05.11.2014 Bulletin 2014/45**

(73) Proprietor: **RISE Acreo AB**
**164 25 Kista (SE)**

(72) Inventors:
 • **Kawahara, Jun**
  **164 25 Kista (SE)**
 • **Andersson Ersman, Peter**
  **164 25 Kista (SE)**
 • **Gustafsson, Göran**
  **164 25 Kista (SE)**
 • **Berggren, Magnus**
  **164 25 Kista (SE)**
 • **Wang, Xin**
  **164 25 Kista (SE)**
 • **Granberg, Hjalmar**
  **164 25 Kista (SE)**

(74) Representative: **Awapatent AB**
**P.O. Box 11394**
**404 28 Göteborg (SE)**

(56) References cited:
**WO-A2-2009/069086     US-A1- 2004 211 989**
**US-A1- 2006 102 869**

**Description**

Technical field of the Invention

The present inventive concept relates to a conductive layer. The inventive concept also relates to a process for manufacturing at least a part of an electronic system comprising at least a part of an electronic device. The inventive concept further relates to a method for reconfiguration of an electronic system. The inventive concept also relates to an electronic device layer intended to be at least a part of an electronic device, and an electronic system. The present inventive concept further relates to a process for manufacturing at least a part of an electronic device, e.g a conductive layer. The present inventive concept further relates to a process for manufacturing at least a part of an electronic device, e.g a conductive layer

Background of the Invention

Since its discovery about 2000 years ago, papers are one of the most commonly manufactured and utilized sheet materials in our world; it represents the planar carrier that we utilize to record, transfer and share printed information. In fact, it is the largest surface ever manufactured by mankind. During the digital revolution, paper has certainly been challenged. However, nowadays, rather thanks to the digital revolution the interest for paper as the carrier for information is regained. One of the prime reasons for this revival is the birth of the technology and science field known as printed electronics. From an application point of view paper now turns into the carrier for flexible electronics, systems that can be manufactured using the same printing tools that were originally developed for graphics and texts. Printed electronics defined on paper labels, package board and on fine paper, is expected to extend the function of paper and to make paper products connected to the digital world.

US2006/102869A1 discloses an ionic conduction material comprising a polymer matrix, at least one ionic species and at least one reinforcing agent, cellulosic material is comprised of cellulose single crystals or of cellulose microfibrils.

However, there is a problem with integration of printed electronics, for example, there is a problem to integrate different printed electronic sub components to each other.

Summary of the Invention

In view of the above-mentioned and other drawbacks of the prior art, a general object of the present inventive concept is to provide an electronic device layer intended to be used as a part of an electronic device for printed electronics, an electronic system comprising printed electronic devices, a process for manufacturing at least a part of an electronic device to be used for printed electronics and which facilitates the integration and reconfiguration of printed electronic devices, and a method for reconfiguration of an electronic system comprising printed electronic devices.

According to at least a first aspect of the present invention, a conductive layer is provided. Said conductive layer comprises a mixture of:

a conductive material being an active organic polymer material or an electrolyte;
a cellulose based material for making said conductive layer self-supportive; and
glycerol for making said conductive layer inherently self-adhesive,
wherein said cellulose-based material is at least partly based on: nanofibrillated cellulose, NFC.

Thus, said conductive material, said cellulose based material and said glycerol may be mixed to a mixture, e.g. a homogenous mixture, where said active organic polymer material or said electrolyte contributes to said conducting layer being ionically and/or electronically conducting and/or semiconducting; said cellulose based material contributes to said conducting layer being self-supportive; and said glycerol contributes to said conducting layer being self-adhesive through out the conductive layer.

Hence, said self-supporting layer may comprise nanofibrillated cellulose, NFC. It should be understood that the term "NFC" is an abbreviation of nanofibrillated cellulose. Thus, throughout the application "NFC" and "nanofibrillated cellulose" is used interchangeably. NFC may be derived from wood.

According to at least one example embodiment one, two or all surfaces of said conductive layer is self-adhesive.

It should be understood that in the context of this application, the term "homogenous" means a composition where all components present in said composition have been well blended with each other and are not present in the form of layers. As the components of the composition have differing size and structure it is not possible to achieve a mixture which is identical throughout every single miniscule portion, and thus homogenous is not to be interpreted in this way. However, the composition should be well mixed with a variance throughout the composition between the components of the composition not exceeding a 20% difference in the concentration of each of the constituents when comparing two different samples taken from the same composition, preferably said difference should not exceed 10% difference. A sample can be taken either during production when the composition is still in a liquid form and in those instances a sample is 2 milliliters. If measuring on a film, a sample is defined as a square of 2x2 mm and extending through the whole depth of the film.

It should be understood that in the context of this application, the term 'a layer being inherently self-adhesive' means that when the layer is split in two, the thus exposed surfaces are also self-adhesive.

Said conductive layer may be referred to as a self-supporting conductive layer, and/or as a self-supporting, self-adhesive conductive layer.

The conductive layer is ionically conductive, i.e. it is in at least one state capable of conducting ions; and/or electronically conductive, i.e. it is in at least one state capable of conducting electrons; and/or semiconducting, i.e. it is in at least one state it has the characteristics of a semiconductor. Hence, the conductive layer is suitable for transport of electrons and/or ions and/or is arranged to be semiconducting. The conductive layer may e.g. have an electrically conductivity of at least 1 S/cm, or at least 5 S/cm, or at least 10 S/cm. The conductive layer may e.g. have an ionically conductivity of at least 1 $\mu$S/cm or e.g. between 10 $\mu$S/cm and 1 mS/cm, or e.g. between 50 and 500 $\mu$S/cm, or e.g. between 100 and 300 $\mu$S/cm.

It should be understood that in the context of this application, the term electrolyte means a composition comprising movable ions, i.e. ions which are movable in response to an applied electric field. In other words, the electrolyte composition is normally such that the movable ions may take part in an electrochemical reaction of a material in ionic contact with said electrolyte composition.

According to at least one example embodiment, said conductive layer comprises a protective layer arranged on a self-adhesive surface of said conductive layer. Hence a self-adhesive surface of said conductive layer may be protected from impurities/particulates. The protective layer may be removed, e.g. may be peeled, cut off or by splitting the conductive layer in two beneath the protective layer, whereby the exposed surface(s) is(are) self-adhesive.

According to at least one example embodiment, said active organic polymer material is at least one of the following:

- polypyrrole (PPy) or polyaniline (PANI),
- a thiophene-based material,
- polythiophene or derivatives thereof e.g. (3,4-ethylenedioxythiophene) (PEDOT) doped or not doped with poly(styrene sulfonate acid), PSS.

Thus according to at least one example embodiment, said active organic polymer material is a conjugated active organic polymer material.

It should be understood that in the context of this application, the term nanofibrillated cellulose (NFC) means a composition comprising NFC and/or microfibrillated cellulose MFC as these terms are used interchangeably in literature. In other words said cellulose-based material at least partly is based on nanofibrillated cellulose (NFC); or said cellulose-based material at least partly is based on microfibrillated cellulose (MFC); or said cellulose-based material at least partly is based on nanofibrillated cellulose (NFC) and/or microfibrillated cellulose (MFC). In other words, the separated cellulose fibers may be up to 20 nm long and tens of nm to several $\mu$m in length.

According to at least one example embodiment, said cellulose-based material consist of nanofibrillated cellulose (NFC) and/or microfibrillated cellulose (MFC).

Said conductive layer may be arranged as a part of an electronic circuit in an electronic device. For example, said conductive layer may be arranged as an electrolyte or be arranged as an electrode, such as e.g. a capacitor electrode, an electrochromic electrode, a sensor electrode, or a gate electrode, in said electronic device. According to at least one example embodiment, said conductive layer is arranged as a transistor channel in said electronic device. Said electronic device may e.g. be a display, a transistor, a diode, a battery, a capacitor, a solar cell, a sensor (the list is non-exhaustive).

Thus, the conductive layer may according to the present inventive concept be used as a part of an electronic circuit in an electronic device.

According to an embodiment of the present inventive concept at least a part of an electronic device may be provided by arranging more than one of the above mentioned conductive layers to be in electronically and/or ionically contact with each other. Hence, the conductive layer as described above may be referred to as a first conductive layer, and there may be provided a second and a third conductive layers. The second and/or third conductive layers may be identical to the first conductive layer, as discussed above, or they may be slightly different in their composition compared to the first conductive layer. According to at least one example embodiment, the second and/or third conductive layer is a metal layer, such as e.g. a copper layer or a plastic layer.

According to at least one example embodiment, the first layer may comprises nanofibrillated cellulose and/or microfibrillated cellulose, glycerol and PEDOT:PSS, the second layer may comprise nanofibrillated and/or microfibrillated cellulose, glycerol, polyelectrolyte and possibly white TiO2 pigment, and the third layer may comprise nanofibrillated cellulose and/or microfibrillated cellulose, glycerol and PEDOT:PSS. Thus, by arranging the second conductive layer in ionic and/or electronic contact with the first and/or the third conductive layer, an electrochromic display may be formed by arranging the second layer between the first and the third layer.

According to at least a second aspect of the present inventive concept, a method for reconfiguration of an electronic system is provided for. The method comprises the step of:

providing a self-supporting conductive layer according to the first aspect of the present inventive concept, which is ionically and/or electronically conducting and/or semiconducting and comprises a cellulose-based material;
attaching said self-supporting conductive layer to a surface in order to arrange said self-supporting conductive layer in ionic and/or electronic contact with said surface,
detaching said self-supporting conductive layer from said surface; and
attaching said self-supporting conductive layer to an electrical circuit in order to arrange said self-supporting conductive layer in ionic and/or electronic contact with said electrical circuit and thus together forming parts of an electronic device.

Effects and features of this second aspect of the present inventive concept are largely analogous to those described above in connection with the first aspect of the inventive concept. Embodiments mentioned in relation to the first aspect of the present inventive concept are largely compatible with the second aspect of the inventive concept.

According to at least one example embodiment, said self-supportive conductive layer and said surface may together form parts of an electronic device being the same, or different from, the above mentioned electronic device.

It should be understood that the said self-supporting conductive layer may be attached and/or detached from said surface and/or said electrical surface using it self-adhesive properties. That is, by being self-adhesive, said self-supporting conductive layer may be attached and/or detached from said surface and/or said electrical surface in an easy manner.

According to at least one example embodiment, said surface may be comprised in a first electrical component, and said electrical circuit may be comprised in a second electrical component. According to at least one example embodiment, said surface may be comprised in a first electrical component, and said electrical circuit may be comprised in said same first electrical component.

According to at least one example embodiment, said conductive layer may be attached to a first position/surface, e.g. an active or a non-active position/surface, and then detached from said first position/surface, and attached to a second position/surface being an active position/surface different from said first position/surface, e.g. when the user wants to activate or change the functionality of the conductive layer.

According to at least a third aspect of the present inventive concept, an electronic device layer is provided. Said electronic device layer comprises:

a self-supporting conductive layer according to the first aspect of the present inventive concept, which is ionically and/or electronically conducting and/or semiconducting and comprises a cellulose-based material;
wherein said self-supporting conductive layer in use is arranged to be an active layer in at least one of the following: a transistor channel, an electrolyte, a conductor, an electrode such as e.g. a capacitor electrode, an electrochromic electrode, a gate electrode, or a sensor electrode;
and wherein said layer is self-adhesive.

Effects and features of this third aspect of the present inventive concept are largely analogous to those described above in connection with the first and second aspect of the inventive concept. Embodiments mentioned in relation to the first and second aspect of the present inventive concept are largely compatible with the third aspect of the inventive concept.

According to at least a fourth aspect of the present inventive concept, an electronic system is provided for. Said electronic system comprises:

a first self-supporting conductive layer according to the first aspect of the present inventive concept, which is ionically and/or electronically conducting and/or semiconducting and comprises a cellulose-based material;
a second self-supporting conductive layer which is ionically and/or electronically conducting and/or semiconducting and comprises a cellulose-based material;
wherein each one of, or either one of, said first and second self-supporting conductive layers in use is arranged to be an active layer in at least one of the following: a transistor channel, an electrolyte, a conductor, an electrode such as e.g. a capacitor electrode, an electrochromic electrode, a gate electrode, or a sensor electrode;

and wherein at least one of said first and second self-supporting conductive layers is self-adhesive;
and wherein said first self-supporting conductive layer is in ionic and/or electronic contact with said second self-supporting conductive layer and thus together forming parts of at least one of the following electronic devices: display, transistor, diode, battery, capacitor, solar cell, sensor.

Effects and features of this fourth aspect of the present inventive concept are largely analogous to those described above in connection with the first, second and third aspect of the inventive concept. Embodiments mentioned in relation to the first, second and third aspect of the present inventive concept are largely compatible with the fourth aspect of the inventive concept.

According to at least a fifth aspect of the present inventive concept, a process for manufacturing at least a part of an electronic device is provided. The process comprises the steps of:

providing a self-supporting layer which is ionically and/or electronically conducting and/or semiconducting and comprises a cellulose-based material;
forming a part of an electronic device with said self-supporting layer; wherein said self-supporting layer is at least one of the following: electrolyte, conductor, electrode, capacitor electrode, electrochromic electrode, gate electrode, transistor channel, sensor electrode;
wherein said self-supporting layer is self-adhesive.

It should be understood that the part of an electronic device may be a part of printed electronics, such as e.g. a printed electronic subcomponent. According to at least one example embodiment, said part of an electronic device is part of a printed electronic device.

It should be understood that the wording "self-supporting" is indicating that the layer may be manufactured and used without the presence of a substrate or carrier. The self-supporting properties of the layer may be at least partly, or fully, attributed/assigned to the use of a cellulose-based material in the self-supporting layer. Thus, the cellulose-based material at least partly contributes to the self-supporting properties of the self-supporting layer.

According to at least one example embodiment, said step of forming a part of an electronic device comprises the step of manufacturing a film comprising said self-supporting layer, wherein said film is intended to be used as an active layer/film in an electronic device.

According to at least one example embodiment, said step of forming a part of an electronic device comprises the step of arranging said self-supporting layer as an active layer in an electronic device and/or in a part of an electronic device, such that said self-supporting layer is forming a part of said electronic device.

According to at least one example embodiment, said self-supporting layer is an organic layer.

According to at least one example embodiment, said self-supporting layer comprises a silicon-based material.

According to at least one example embodiment, said self-supporting layer is comprising and/or being comprised in a film. Thus, the self-supporting layer may be referred to as a "film" throughout the application.

According to at least one example embodiment, said step of providing a self-supporting layer which is ionically and/or electronically conducting and/or semiconducting comprises the step of providing a self-supporting layer which is ionically conducting.

According to at least one example embodiment, said step of providing a self-supporting layer which is ionically and/or electronically conducting and/or semiconducting comprises the step of providing a self-supporting layer which is electronically conducting.

According to at least one example embodiment, said step of providing a self-supporting layer which is ionically and/or electronically conducting and/or semiconducting comprises the step of providing a self-supporting layer which is semiconducting.

It should be understood that said electronic device may be an electrochemical device.

The at least part of an electronic device may be a part of an electrochemically active device such as e.g. a display or a transistor. The at least part of an electronic device may be a part of an electrochromic display, a part of an electronic and/or electrochemical transistor or a part of an electrolyte capacitor (the list being non-exhaustive). Hence, the same self-supporting layer may be used for different functionalities in different electronic devices.

The self-supporting layer may preferably be flexible and/or elastic.

According to at least one example embodiment, said step of providing a self-supporting layer comprises the step of providing a self-supporting layer comprising at least one of the following: a polyelectrolyte, a conjugated polymer such as e.g. polypyrrole, PPy, polyaniline, PANI, a thiophene-based material, polythiophene or derivatives thereof e.g. (3,4-ethylenedioxythiophene), PEDOT, doped or not doped with poly(styrene sulfonate acid), PSS, PEDOT:PSS or another conjugated polymer.

According to at least one example embodiment, said self-supporting layer comprises at least one of the following: a polyelectrolyte, a conjugated polymer such as e.g. polypyrrole, PPy, polyaniline, PANI, a thiophene-based material,

polythiophene or derivatives thereof e.g. (3,4-ethylenedioxythiophene), PEDOT, doped or not doped with poly(styrene sulfonate acid), PSS, PEDOT:PSS or another conjugated polymer.

According to at least one example embodiment, said self-supporting layer comprises another electrochemically active conjugated polymer.

According to at least one example embodiment, said self-supporting layer comprises glycerol, wherein said glycerol contributes to said self-supporting layer being self-adhesive.

Thus, by comprising glycerol in the self-supporting layer, the self-supporting layer may acquire self-adhesive properties. The self-adhesive properties of the self-supporting layer may be at least partly attributed to the hygroscopic properties of glycerol.

According to at least one example embodiment, said self-supporting layer is a first self-supporting layer, and the process further comprises the steps of:

> providing a second layer which is ionically and/or electronically conducting and/or semiconducting, wherein said second layer is at least one of the following: electrolyte, conductor, electrode, capacitor electrode, electrochromic electrode, gate electrode, transistor channel, sensor electrode;
> forming a part of an electronic device by arranging said first self-supporting layer on top of said second layer such that said first self-supporting layer is in ionic and/or electronic contact with said second layer, and wherein said first self-supporting layer and said second layer are forming parts of at least one of the following electronic devices: display, transistor, diode, battery, capacitor, solar cell, sensor.

Thus, the first self-supporting layer may be attached to a second layer, at least partly due to the self-adhesive properties of the first self-supporting layer. By electrically and/or ionically connecting the first self-supporting layer and the second layer, the two layers may form parts of an electronic device, such as e.g. a printed electronic device and/or form an electronic device, such as e.g. a printed electronic device.

According to at least one example embodiment, said step of providing a second layer comprises the step of providing a second self-supporting layer comprising at least one of the following: a cellulose-based material such as NFC, glycerol, thiophene-based material such as e.g. poly(3,4-ethylenedioxythiophene), PEDOT, doped or not doped with poly(styrene sulfonate acid), PSS, or other conjugated polymer systems such as polyaniline, PANI, or polypyrrole, PPy. Hence said first and said second self-supporting layer may be comprised of the same material and may be identical to each other.

It should be understood that by providing a second self-supporting layer comprising glycerol, said second self-supporting second layer may become self-adhesive as described previously in relation to the first self-supporting layer. It should be understood that by providing a second self-supporting layer comprising a cellulose-based material, such as e.g. NFC, said second self-supporting layer may be self-supporting, as described previously in relation to the first self-supporting layer.

According to at least one example embodiment, the process further comprising the steps of:

> providing a third layer which is ionically and/or electronically conducting and/or semiconducting, wherein said third layer is at least one of the following: electrolyte, conductor, electrode, capacitor electrode, electrochromic electrode, gate electrode, transistor channel, sensor electrode;
> arranging said second layer in ionic and/or electronic contact with said first and said third layer; wherein said first layer comprises NFC, glycerol and PEDOT:PSS, said second layer comprises NFC, glycerol, polyelectrolyte and white TiO2 pigment, and said third layer comprises NFC, glycerol and PEDOT:PSS; and
> forming an electrochromic display by arranging said second layer between said first and said third layer.

In other words, said second layer may be sandwiched between said first and said third layer.

It should be noted that all three layers may be self-supporting layers comprising a cellulose-based material and/or self-adhesive layer comprising glycerol.

According to at least one example embodiment, the process comprising the steps of:

> providing a self-supporting layer which is ionically and/or electronically conducting and/or semiconducting and comprises a cellulose-based material;
> forming a part of at least two electronic devices with said self-supporting layer; wherein said self-supporting layer is at least one of the following: electrolyte, conductor, electrode, capacitor electrode, electrochromic electrode, gate electrode, transistor channel, sensor electrode;
> wherein said self-supporting layer is self-adhesive.

Thus, the same self-supporting layer may be used in at least two different electronic devices interchangeably, e.g. as an electrolyte in a first electronic device, and as a transistor channel in a second electronic device.

According to at least one example embodiment, an electronic device layer is provided. The electronic device layer comprises:

a self-supporting layer which is ionically and/or electronically conducting and/or semiconducting and comprises a cellulose-based material;
wherein said self-supporting layer is intended to be used as an active layer in at least one of the following: electrolyte, conductor, electrode, capacitor electrode, electrochromic electrode, gate electrode, transistor channel, sensor electrode;
and wherein said layer is self-adhesive.

The electronic device layer may be used as a part of an electronic device, e.g. as an active layer in the electronic device such as e.g. an active layer in a printed electronic device.

The self-supporting properties of the self-supporting layer may at least partly, or fully, be attributed to the cellulose-based material comprised in the self-supporting layer.

According to at least one example embodiment, the self-supporting layer comprises glycerol. Thus, the self-supporting layer may become self-adhesive. The self-adhesive properties of the self-supporting layer may at least partly, or fully, be attributed to the glycerol comprised in the self-supporting layer.

According to at least one example embodiment, an electronic system is provided. The electronic system comprising:

a first self-supporting layer which is ionically and/or electronically conducting and/or semiconducting and comprises a cellulose-based material;
a second self-supporting layer which is ionically and/or electronically conducting and/or semiconducting and comprises a cellulose-based material;
wherein each one of, or either one of, said first and second self-supporting layers is intended to be used as an active layer in at least one of the following: electrolyte, conductor, electrode, capacitor electrode, electrochromic electrode, gate electrode, transistor channel, sensor electrode;
and wherein at least one of said first and second self-supporting layers is self-adhesive;
and wherein said first self-supporting layer is in ionic and/or electronic contact with said second self-supporting layer and thus together forming parts of at least one of the following electronic devices: display, transistor, diode, battery, capacitor, solar cell, sensor.

For example, a first self-supporting layer, also referred to as a first film which may be an electrolyte layer, may be attached to a second self-supporting layer, also referred to as a second film which may be a pixel electrode of an electrochromic display. The first and the second films may form part of e.g. a sensor device. The first and the second film may then be detached from each other and transferred to other configurations. Thus the first film may become an electrolyte of an electronic and/or an electrochemical transistor and the second film may become a gate electrode of an electronic and/or electrochemical transistor. Another example, a first self-supporting layer, may be a pixel electrode charged to its colored state, e.g. as a result of a sensing event. This first self-supporting layer may then be detached from its other components and reconfigured or integrated on top of an external transistor channel. Hereby, spontaneous discharging and associated current modulation of the transistor channel may be achieved without applying any additional gate voltage.

The self-supporting layer may also form part of a Schottky diode. Preferably, according to this example embodiment, the self-supporting layer comprises NFC and silicon (Si) particles. The self-supporting layer may subsequently be attached to a first external electrode, e.g. an aluminium electrode, and a second external electrode, e.g. a carbon electrode or a silver electrode for forming the Schottky diode.

According to at least one example embodiment, a method for reconfiguration of an electronic system is provided. The method comprises the steps of:

providing a self-supporting layer which is ionically and/or electronically conducting and/or semiconducting and comprises a cellulose-based material;
attaching said self-supporting layer to a first external layer such that said self-supporting layer is in ionic and/or electronic contact with said first external layer and thus together forming parts of a first electronic device;
detaching said self-supporting layer from said first external layer; and
attaching said self-supporting layer to a second external layer such that said self-supporting layer is in ionic and/or electronic contact with said second external layer and thus together forming parts of a second electronic device.

It should be noted that all layers, or some of the layers, mentioned in all aspects and embodiments of the present inventive concept may be ionically and/or electronically conducting and/or semiconducting, all layers, or some of the layers may be self-supporting layers, all layers or some of the layers may comprise a cellulose-based material such as e.g. NFC, all layers, or some of the layers may be self-adhesive, all layers, or some of the layers may comprise glycerol, all layers, or some of the layers may comprise PEDOT:PSS.

Thus, the layers may be attached and detached from each other using a "cut and stick" methodology. The electronic device may be a display, transistor, diode, battery, capacitor, solar cell, sensor. The step of attaching the self-supporting layer to the first and/or second external layer may be referred to as lamination. The step of detaching the self-supporting layer from the first external layer may be referred to as delamination.

Brief description of the drawings

The present inventive concept will now be described in more detail, with reference to the illustrative and non-limiting appended drawings showing example embodiments of the inventive concept, wherein:

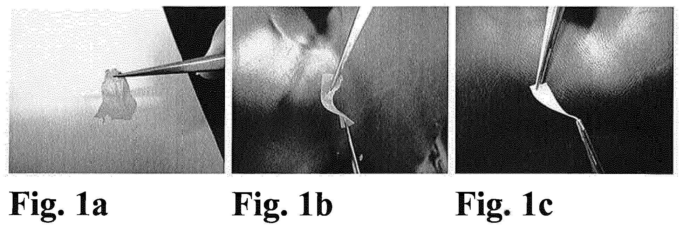

Figs. 1a-1c are photographs showing self-supporting layers/films according to at least one example embodiment, where the self-supporting layers/films are based on (a) NFC and PEDOT:PSS, (b) NFC and transparent polyelectrolyte, and (c) NFC and opaque polyelectrolyte;

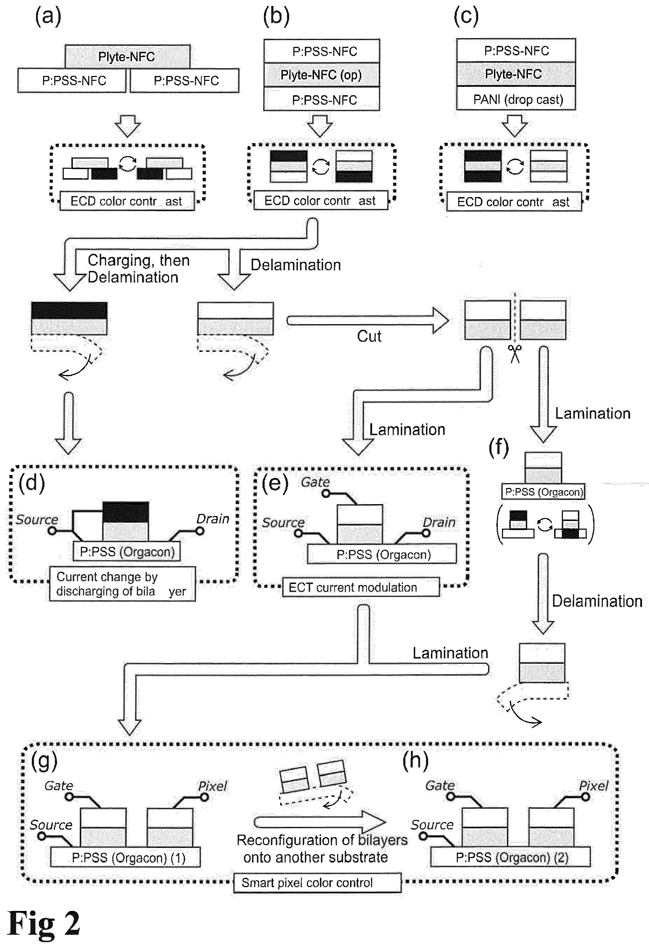

Fig. 2 is illustrating various manufacturing, reconfiguration and characterization procedures according to at least one example embodiment. The lateral symmetric electrochromic display, hereinafter abbreviated ECD, the vertical symmetric ECD and the complementary vertical non-symmetric ECD is shown in (a), (b) and (c), respectively. The electrochromic electrodes of each ECD are ionically connected by either a transparent, (a) and (c), or an opaque, (b), electrolyte layer. (d) shows an electrochemical transistor, hereinafter abbreviated ECT, achieved by delamination and reconfiguration of a pre-charged (b) electrode that is applied onto an ECT channel patterned on top of a PET foil. The ECT in (e) is created after reconfiguring the (b) pixel electrode into an ECT gate electrode on top of a patterned ECT channel on a PET foil, while (f) proves that the ECD functionality can be maintained after reconfiguration. To fully demonstrate the concept, the color state of an ECD can be controlled by the conduction state of an ECT in an electrochromic, hereinafter abbreviated EC, smart pixel device (g), which is obtained by delamination and reconfiguration of the (f) subcomponent onto the (e) device. Finally, this is further evidenced by simply duplicating the EC smart pixel device onto another substrate by utilizing the reconfiguration technique (h) and thereafter recording identical I-V characteristics as compared to device (g);

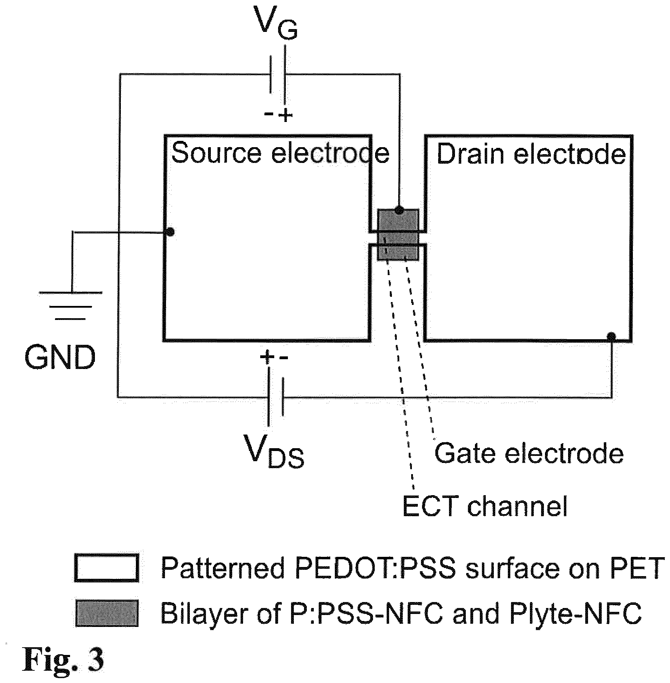

Fig. 3 is a top view of an ECT / EC smart pixel according to at least one example embodiment. The drain and source electrodes are $20 \times 20$ mm2 squares and they are connected by a narrow rectangle having an area of $0.4 \times 10$ mm2. Approximately 3 mm of the length of the rectangle is covered by the electrolyte and the gate electrode bilayer, thereby forming the active area of the ECT channel, while an area of $2 \times 2$ mm2 of the bilayer sheet was attached at the edge of the drain electrode such that the bilayer serves as the coloring pixel electrode and the drain electrode serves as the counter electrode of the EC smart pixel device. Note that the VDS is connected between the drain and source electrodes in the case of an ECT measurement, while the source and pixel electrodes are connected in the EC smart pixel measurement;

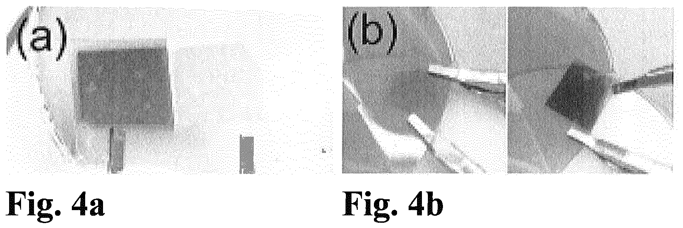

Figs. 4a- 4b are photographs showing two different display architectures that have been characterized according to at least one example embodiment: (a) lateral symmetric ECD based on two P:PSS-NFC electrodes bridged by Plyte-NFC, and (b) complementary vertical non-symmetric ECD consisting of Plyte-NFC sandwiched by one layer of P:PSS-NFC and a drop cast layer of PANI, no photograph is available for the vertical symmetric ECD based on opaque Plyte-NFC sandwiched by P:PSS-NFC on both sides;

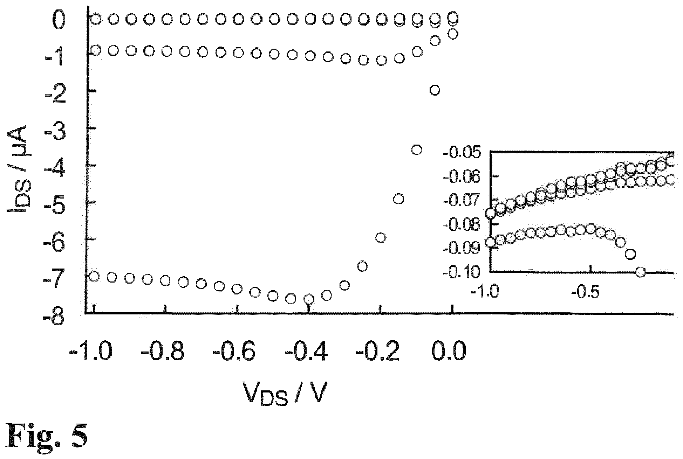

Fig. 5 is a graph showing characteristics of an ECT utilizing Orgacon as the transistor channel and the drain and source electrodes, Plyte-NFC as the electrolyte and P:PSS-NFC as the gate electrode, according to at least one example embodiment, the inset graph indicates the off-current levels at elevated gate voltages;

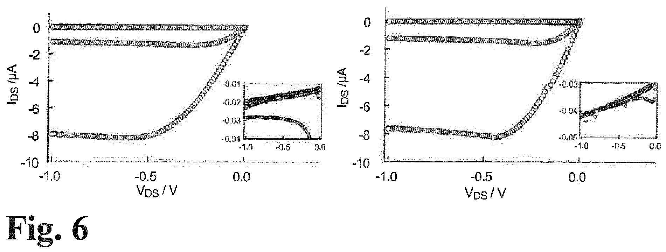

Fig. 6 is illustrating two graphs showing an ECT with identical I-V characteristics 19 (left) and 31 (right) days after device manufacturing, respectively, according to at least one example embodiment, the inset graphs indicate the off-current levels at elevated gate voltages;

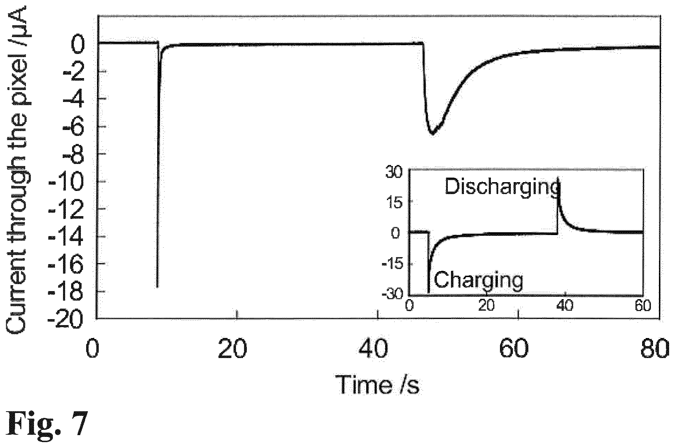

Fig. 7 is a graph showing that the ECT can prevent ECD cross-talk, according to at least one example embodiment. The first current peak at t~10 s corresponds to electrochemical reduction of the channel into its non-conducting state by applying VG. VDS was applied at t~25 s but no current peak due to pixel coloration can be observed, which indicates that the off-state of the ECT is capable of keeping the ECD in its initial off-state. Finally, VG = 0 V is applied at t~45 s, which brings the ECT channel to its on-state that, in turn, allows for pixel coloration by the constantly applied VDS. The inset graph shows the charging and discharging behavior of an independent ECD;

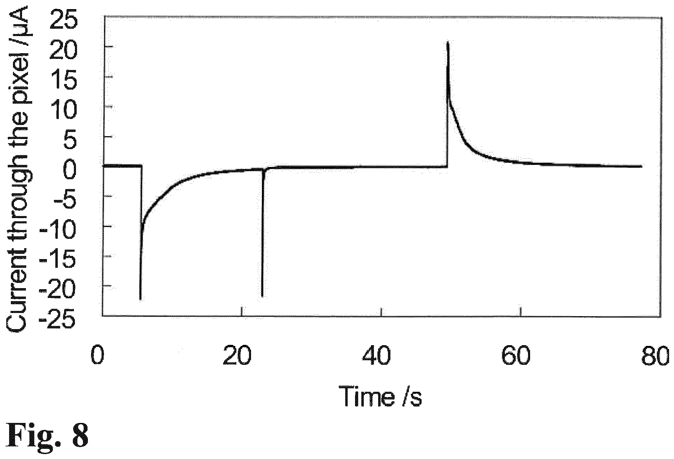

Fig. 8 is a graph showing that the ECT its capable to maintain the color state of the ECD according to at least one example embodiment. First, the pixel is switched to its colored state by VDS, which is shown in the first current peak at t~3 s. Subsequently VG is set to 1 V and the transistor channel switches off to its reduced state at t~20 s, which generates the second current peak. At t~32 s VDS is set to 0 V, which results in maintained color even though a small leakage current can be observed. When VG is set to 0 V at t~43 s, the ECD is decolored by the discharging current indicated by the positive current peak; and

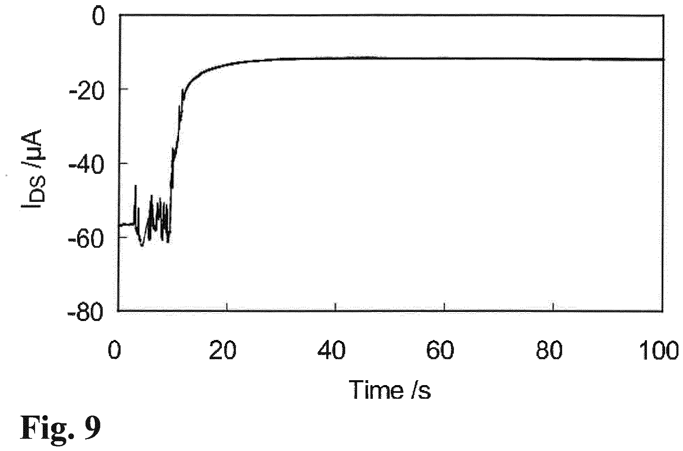

Fig. 9 is a graph showing the current modulation of an ECT channel, according to at least one example embodiment. The gate electrode was pre-charged adjacently to the ECT device, peeled off and reconfigured on top of the ECT channel. Before laminating the pre-charged gate electrode and its electrolyte layer, IDS -55 μA can be observed during the first few seconds of the measurement. Upon reconfiguration of the charged gate electrode, IDS decreases to -10 μA; far from the most optimized on/off-ratio in terms of transistor performance but yet it proves the concept of system integration, reconfiguration and energy transfer by using the peel and stick technique.

Detailed description of the drawings

The above, as well as additional objects, features and advantages of the present inventive concept, will be better understood through the following illustrative and non-limiting detailed description of example embodiments of the present inventive concept, with reference to the appended drawings.

Various aspects of the above-referenced methods, processes, devices and systems will now be presented. In presenting these aspects, embodiments will be used to illustrate features of such methods and systems. It should be understood that these embodiments are shown by way of example only, and are not intended to be limiting in any way. The inventive concept as defined by the appended claims may be embodied both in these and in numerous other forms. While these embodiments illustrate various combinations of elements and acts, it should be appreciated that some or all of such elements or acts may be assembled or practiced in other ways, with or without still further elements or acts, while still practicing the inventive concept. For improving the readiness of the application, the following sections have been numbered and given headings.

*1. Introduction*

Paper is based on wood fibers comprising the most abundant organic compound derived from biomass, namely cellulose. One such renewable cellulose material, nanofibrillated cellulose (NFC), has attracted a very large interest during the last decade. This material emanates from the cellulose fibrils inside the wood fibre wall and the fibrils are liberated in different ways using both chemical treatment and high-pressure homogenization to separate the fibrils from each other and to stabilize them in aqueous dispersion. The attraction of NFC stems from their interesting intrinsic properties such as its high specific surface area, flexibility, high aspect ratio of the fibrils, good mechanical properties, and its film forming capacity. NFC dispersions converted into "nanopaper" films can be transparent, reach mechanical properties similar to that of cast iron, or show very good oxygen barrier properties. NFC has also been used as a filler to provide reinforcement, flexibility and transparency in nanocomposites and displays. Even though NFC is described in detail here, other cellulose based materials are conceivable within the present inventive concept.

The field of printed electronics is presently attracting a lot of interest since it promises for distributed intelligence and monitoring; features that are expected to combat some of the challenges in our society related to health care, monitoring, logistics and safety. A tremendous variety of components have been developed and manufactured on flexible substrates using different kinds of coating, printing and lamination tools. Examples include batteries, capacitors, solar cells, sensor devices, displays, diodes, transistors and logic circuits. To achieve true printed electronics applications, typically several different kinds of components need to be integrated into a monolithic flexible system. However, integration of printed electronic subcomponents has proven to be a major challenge with respect to the merger and compatibility of different printing technologies, materials and post-processing steps. In fact, in many cases specific manufacturing steps are mutually exclusive since some steps tend to destroy or deteriorate features and components manufactured earlier in the integration scheme. This then implies a decreased production yield that can only be solved by typically increasing the cost for production and integration. In addition to this, the complexity of such production process also brings along the requirement of huge investments of non-standard manufacturing equipment. The overall mindset when developing the printed electronics platform must therefore aim at minimizing the number of materials and process steps, as well as trying to make the processes of different subcomponents compatible with each other by utilizing the same kind of materials for different functionalities.

One of the major advantages of using electrochemical devices, based on for instance an electrochemically active conjugated polymer and an electrolyte, is that the very same material can be used for a versatility of device functions. The very same electrolyte component can be used both as the gate insulator in electrochemical and electrolyte-gated field effect transistors, and also as the electrolyte in electrochromic (EC) display devices, batteries and capacitors. PEDOT:PSS, poly(3,4-ethylenedioxythiophene) doped with poly(styrene sulfonate acid), can serve as the conductor, display electrode and also as the transistor channel in printed integrated circuits, such as displays, indicators and sensor systems. The PEDOT:PSS material is electrically conducting and optically transparent in its pristine state and it exhibits electrochromic switch characteristics and control of the conductivity upon electrochemical switching, as e.g. described in the patent application with publication number WO 2011 /042431 A1 and the patent US 7 012 306 B2. PEDOT is a π-conjugated electronic polymer and the PSS phase serves as its counter ion. In the neutral state PEDOT appears deep blue and exhibit semiconducting properties. PEDOT can reversibly be switched in between its oxidized and neutral state. The electrochromic effect can be utilized in transmissive displays by using transparent electrolytes, or in a reflective mode of display operation in which the counter electrode is hidden under an opaque electrolyte. The latter version is typically used when PEDOT:PSS serves as both the counter and the pixel electrodes since such configuration maximizes the color switch contrast of the resulting display. However, there are different strategies in order to enhance the color switch contrast also for applications where transmission mode is desirable, for example by using a bottom display electrode and a top display electrode that together express a complementary EC switching characteristics with respect to each other. Polyaniline (PANI) is such an EC material that electrochemically switch color in a complementary fashion with respect to PEDOT, i.e. it exhibits a faint yellow, close to transparent, color in its reduced leucoemeraldine state, while PANI becomes dark blue, almost violet, in its oxidized pernigraniline state. Hence, an electrochromic display comprising a transparent electrolyte layer sandwiched by one PEDOT:PSS electrode and one PANI electrode can switch between a close to transparent pixel state to a dark black-blue colored state, where the latter color state is obtained by applying the positive and negative voltage to the PANI and PEDOT:PSS electrode, respectively.

Besides reducing the number of different materials in printed electronics to achieve a resulting robust and rational platform for flexible electronics, one should also consider radically new integration concepts. In packaging and graphic art industry labels are commonly adhered to paper surfaces and products to generate a final integrated system or to extend the functionality of a specific product. Often, these add-on stickers include a coating that provides pressure-sensitive adhesion of the label to the surface of the carrier. In some cases those stickers can later be removed and then transferred to a different new carrier or item to serve yet another application.

The approach of the present inventive concept aims at functionalizing the carrier substrate in order to reduce the number of materials, and thus the number of processing steps, and also to develop a new integration concept for a reconfigurable electronic system by using self-adhesive electronic materials to enable a "cut, stick and peel" technology for printed electronics, i.e. to establish an electronic equivalence to the "scrapbook" or "sticker book".

*2. System reconfiguration of electronic devices*

*2.1 General description of the system reconfiguration process*

A semi-dried membrane of NFC mixed with appropriate plasticizers exhibits gel-like behavior when it comes to appearance and physical hardness. This property is partially remained in the fully dried state and hence a self-supporting film can be obtained thanks to the strong scaffold functionality of NFC, which originates from hydrogen bonds and/or ionic bonds inside the polymer matrix, see Fig. 1. The resulting self-supporting composite films containing EC or electrolyte materials can weakly adhere to other solid functional substrate surfaces by simple lamination. Thanks to its weak adhering property the film can also be detached (here called "delaminated") from a substrate while maintaining shape and functionality. This finally results in an extremely high degree of freedom to construct, disassemble and reconstruct multilayered printed electronic components. For example, in this report, NFC membranes hybridized with PEDOT:PSS are stacked onto NFC membranes hybridized with polyelectrolyte and white $TiO_2$ pigment by hand, and a vertical symmetric ECD is established by that another layer of PEDOT:PSS-NFC is laminated on the other side of the polyelectrolyte-NFC.

Additionally, two other display architectures can also be prepared by simple lamination. A lateral symmetric ECD is constructed by the lamination of two separated PEDOT:PSS-NFC on the same side of the polyelectrolyte-NFC, where the two PEDOT:PSS-NFC are physically isolated. A vertical non-symmetric ECD is instead made from a drop-cast PANI layer on top of a polyelectrolyte-NFC (polyelectrolyte-NFC-PANI) and lamination of PEDOT:PSS-NFC on the opposite surface of the polyelectrolyte-NFC layer. These three ECD structures are drawn in Fig. 2 (a) to (c).

Upon delamination of the vertical symmetric ECD, one of the PEDOT:PSS-NFC layers is delaminated and removed from the other two layers, and the remaining bilayer can instead be laminated onto another functional surface in order to serve as e.g. the electrolyte and the ECD pixel electrode or the electrolyte and the gate electrode of an ECT. This whole process, consisting of lamination, delamination and re-lamination, is here denoted "system reconfiguration". Additionally, the NFC-based functional films typically are very robust and can be cut by scissors, folded or bended, hence, they have an appearance similar to the sticky notes used in scrapbooks or sticker books.

*2.1.1 Reconfiguration from ECD to ECT.*

After characterizing the color switch contrast of the ECDs shown in Fig. 2 (a) to (c), the PEDOT:PSS-NFC layer on one side of the vertical symmetric ECD (Fig. 2 (b)) was delaminated and the remaining bilayer was cut in two pieces by using a pair of scissors. One of the cut pieces was manually laminated onto a PEDOT:PSS-based ECT channel prepared from an Orgacon EL-350 film patterned by a knife plotter tool. Here the laminated bilayer served as the gate electrode and the electrolyte layer of an ECT, and the patterned PEDOT:PSS on top of the PET substrate served as the drain, source and channel material, see Fig. 2 (e). The other cut piece was put onto another Orgacon foil such that color switching could be observed in order to prove the reconfiguration concept (data not recorded), see Fig. 2 (f).

*2.1.2 ECT characterization*

The structure of the resulting ECT is drawn in Fig. 3, although the schematic illustration shows a complete EC smart pixel device that will be discussed later. Instead of completing the EC smart pixel device by preparing the top electrode of the ECD moiety, the ECT is obtained by connecting a DC power supply to the drain electrode such that the I-V curves of the ECT could be recorded separately.

*2.1.3 Reconfiguration from ECT to EC smart pixel.*

The ECT characterized in 2.1.2 was further disassembled by delamination of the gate electrode bilayer. In combination with another piece of bilayer, which is mentioned in the end of 2.1.1 above, the two films were laminated onto another similarly patterned Orgacon film in order to create an EC smart pixel device, see Fig. 2 (g) and Fig. 3. In this document an EC smart pixel is defined as an ECD connected in series with an ECT, hence, the ECD coloration can be controlled by the conduction state of the addressing ECT. Here, upon reconfiguration, one of the laminated bilayers served as the gate electrode and the other was used as the pixel top electrode.

*2.1.4. EC smart pixel characterization.*

The same external circuitry was connected as in the case of ECT characterization, except for that the pixel top electrode, and not the drain electrode, was connected to the equipment. The EC smart pixel characterization method has been reported in journal publications previously.

*2.1.5. Reconfiguration and duplication of the EC smart pixel.*

The two bilayers of the EC smart pixel device described in 2.1.3 serve as the gate and the ECD pixel electrodes, and after delamination they were laminated onto another Orgacon film having the same pattern in order to create the same EC smart pixel architecture as in 2.1.3, which was characterized according to 2.1.4.

*2.1.6. Reconfiguration of a pre-charged hybridized NFC-based layer.*

A vertical symmetric ECD was prepared according to Fig. 2 (b), followed by applying a voltage across the ECD, which in turn results in electrode charging. After delamination of the ECD, one PEDOT:PSS-NFC layer is fully oxidized while the other PEDOT:PSS-NFC layer is in its fully reduced state. The bilayer including reduced PEDOT:PSS was then reconfigured and transferred onto a PEDOT:PSS-based ECT channel such that the bilayer instead became the electrolyte and the gate electrode of an ECT. However, in this case the gate electrode is not connected to any power supply; it is only wired directly to the source electrode. So, since the gate electrode was electrochemically reduced in advance, it is expected that this charge will be equilibrated between the gate and the ECT channel, hence, current modulation of the ECT channel should occur just upon bringing the sheets into contact with each other.

*3. Device characteristics.*

*3.1 Color switch contrast of the ECD.*

EC pixels with three different architectures (Fig. 2 (a), (b) and (c)) were evaluated and the data is shown in Table 1. The measurement is performed by obtaining the CIE color space values L*, a* and b* of the pixel electrode. Finally the color contrast value ΔE* is calculated from the following equation:

$$\Delta E^* = \sqrt{\left(L_2^* - L_1^*\right)^2 + \left(a_2^* - a_1^*\right)^2 + \left(b_2^* - b_1^*\right)^2}$$

Table 1. ECD color switch contrast measurements based on CIE L*a*b* color coordinates. The numbers 1 and 2 indicated by the subscripts beside L*, a* and b* represent the decolored (oxidized light blue) and the colored (reduced deep blue) state of the pixel top electrode, respectively.

| Device | $L^*_1$ | $a^*_1$ | $b^*_1$ | $L^*_2$ | $a^*_2$ | $b^*_2$ | $\Delta E^*$ |
|--------|---------|---------|---------|---------|---------|---------|--------------|
| (a) | 58.16 | -4.05 | -7.55 | 28.83 | -0.22 | -26.68 | 35.2 |
| (b) | 63.48 | -4.08 | -6.10 | 43.39 | -1.49 | -21.19 | 25.3 |
| (c) | 37.15 | -12.7 | 3.48 | 17.28 | -3.23 | -17.2 | 30.2 |

Here the subscripts "1" and "2" for each color space parameter indicate the decolored (oxidized light blue) and colored (reduced deep blue) states of the PEDOT pixel electrode, i.e. the on and off states, respectively. The highest color contrast was obtained in a lateral pixel device; $\Delta E^* = 35.2$. This is somewhat lower as compared to recently reported PEDOT:PSS-based EC pixel devices. However, the obtained color contrast is considered to be sufficient for most display applications. The color contrast results and the appearances of the characterized displays are shown in Table 1 and Fig. 4.

*3.2 ECT characteristics.*

The current-voltage (I-V) output curve for the depletion mode ECT device (Fig. 2 (e)) is shown in Fig. 5. Here the electric current through the channel between the drain and source electrodes (IDS) was recorded by sweeping the drain-source voltage (VDS) from 0 to -1.0 V at an incremental step of 0.01 V for 6 different gate voltages (VG); 0 V at the first cycle and then increased in steps of 0.25 V until the last sweep at 1.25 V. The time between two adjacent data points was 10 ms. An on/off-ratio of approximately 100 was observed and the off-current level was about 60-80 nA. Both these values, especially the low off-current, are sufficient for the operation of an active matrix addressed display, see next section. The ECT device did not show any issues regarding delamination or degradation upon storage in ambient atmosphere (22 °C and 40 %RH) for one month. Fig. 6 shows an ECT measured 19 and 31 days after device assembly. The relatively constant on-and off-current levels of the ECT demonstrate high degree of stability over extended periods of time.

*3.3 EC smart pixel: integration of ECD and ECT.*

The function of the EC smart pixel, which herein is defined as the circuit integration of one ECT and one ECD, is validated by using two previously reported measurement methods. The two methods are chosen in order to investigate the two-folded functionality of the ECT in the smart pixel configuration; prevention of cross-talk along the addressing lines of the ECD devices in an active-matrix display and to improve the retention time of an ECD that has been updated to its colored state. The former is evaluated by monitoring that the pixel does not switch from its transparent off-state to its colored on-state upon applying VDS and VG (the ECT is in its off-state) simultaneously. The latter feature can be evaluated by applying VG after switching the ECD to its on-state, followed by turning off VDS, which results in color retention of the ECD introduced by the non-conducting off-state of the ECT channel. Fig. 7 and Fig. 8 show the results of the two ECT-ECD smart pixel functionalities.

Fig. 7 indicates that the ECD is switched on only when VDS is turned on and when VG is 0 V (the ECT is in its on-state), as evidenced by the low leakage current flow through the EC smart pixel while the ECT channel is non-conducting. This is a required feature in order to prevent cross-talk effects along the EC pixel addressing lines in an active matrix addressed EC display; only one ECT per EC pixel addressing line is allowed to be in its conducting state. Fig. 8 demonstrates that the conduction state can control the retention time of the EC pixel. This has a direct impact on the power consumption in large active-matrix display systems. EC pixels are semi-bistable to their nature, thanks to their electrochemical and impedance characteristics. Further, the ability to control the color state of each EC pixel in a larger system is advantageous; not only between the on- and off-states but also to enable gray-scale levels. Here, the negative current peaks in Fig. 7 and Fig. 8 correspond to electrochemical reduction, i.e. switching to the non-conducting state and deep-blue coloration, of the PEDOT:PSS-based ECT channel or EC pixel electrode, while the positive current peak instead represents oxidation into the conducting and transparent form of the PEDOT:PSS in the ECT channel or EC pixel electrode. The area dependence on the switching time can be observed in the graphs; the relatively narrow current peaks correspond to the redox reactions of the ECT channel and the relatively broader current peaks represent color updates in the EC pixel. The switching time of the EC pixel is typically prolonged by high strain on the ECT channel, i.e. by simultaneously applying VDS and VG results in a reduction front propagating within the PEDOT:PSS channel outside the electrolyte edge. This is reflected in the broadened coloration current peak starting at t~45 s in Fig. 7.

By combining the measurements and results given in Fig. 7 and Fig. 8 we draw the conclusion that the color state of the EC pixel can be properly controlled by the applied gate voltage to the ECT device, and practically no leakage current is observed.

*3.4 Reconfiguration test of NFC-hybridized electrochemical devices.*

Various kinds of electronic devices have been established by combining nanofibrillated cellulose (NFC) with either a polyelectrolyte or a conducting polymer, e.g. electrochromic displays, electrochemical transistors, electrochromic smart pixels and even electrolyte capacitors; components that together as integrated systems can form larger electronic systems, such as active matrix addressed displays, indicators, sensors and more. The devices obtained here utilize NFC in order to create ionically and electronically conducting films that are self-supporting, i.e. functionalized substrates. In addition to this, it is also possible to integrate, disintegrate and reconfigure the initially created subcomponents by using a "cut, stick and peel" technique similar to what is being used in a sticker book.

Reconfiguration of the gate electrode and the pixel electrode in the respective ECT and EC smart pixel devices, which resulted in a second set of devices, showed mostly identical performance as compared to the first set of devices shown in Fig. 5, 7 and 8 (data not shown). This demonstrates the robustness of the interfaces that are established upon reconfiguration of the functionalized substrates.

The system integration concept is also demonstrated by the measurement shown in Fig. 9. An electrochemical capacitor is formed by using a layer of polyelectrolyte-NFC as the intermediate layer, Orgacon as one of the electrodes and a layer of PEDOT:PSS-NFC as the other electrode. The latter electrode is then electrochemically reduced by applying a voltage of ~5 V for ~10 seconds. The capacitor structure was then peeled apart by separating the bilayer from the Orgacon sheet, and the remaining bilayer was instead reconfigured to become the electrolyte and the gate electrode of an ECT by simply sticking it onto a 0.4 × 3 mm2 PEDOT:PSS-based (Orgacon) channel. Prior to the attachment of the pre-charged gate electrode and its corresponding electrolyte, an on-current exceeding 50 μA was flowing between the source and drain electrodes (VDS = -1 V). A spontaneous discharging of the gate electrode occurred, immediately after lamination, which then resulted in current modulation of the depletion mode ECT channel. Hence, the energy stored in the pre-charged conducting polymer was sufficient to alter the conduction state of the ECT device. The results demonstrate that organic electronic systems can be integrated, disintegrated and reconfigured into various flexible autonomous electronic systems by simple means and that information can be transferred between different devices.

*4. Conclusions.*

A new concept for system integration of subcomponents for flexible electronics is demonstrated. The "cut, stick and peel" technique increases the degree of freedom to attach, detach and reconfigure electronic subcomponents located on a common substrate, making it a novel method for manufacturing of a variety of printed electronic systems that minimizes the number of materials and processing steps. The system integration technique is obtained by casting NFC with an electrochromic material or an electrolyte phase into a self-supporting film, which brings either electronic or ionic functionality into the film. Electronic devices are then easily created by stacking the self-adhesive films on top of each other. An electrochromic display pixel without ordinary plastic substrate (e.g. PET film), an electrochemical transistor where the NFC hybrid layers stick to the solid PEDOT:PSS channel and an electrochromic smart pixel composed of one pixel and one transistor were all successfully achieved. The components functioned well after performing the peel and stick reconfiguration of the NFC layers, and they also showed very good stability with respect to storage time in ambient atmosphere. The unique ability to integrate and reconfigure electronic systems based on self-supporting subcomponents will pave the way for the creation of more advanced flexible electronic circuits.

*5. Experimental.*

*Materials and equipment*

Aqueous dispersion of anionic carboxylated NFC (0.5 wt%, pH=7) was prepared at Innventia AB, Sweden, according to the method described by Wågberg et al. Aqueous dispersion of PEDOT:PSS "Baytron P HC", toluene solution of polyaniline "PANIPOL T", glycerol, and aqueous solution of poly(diallyl dimethyl ammonium chloride) (PDADMAC, polyelectrolyte with average M.W.<100,000), were purchased from Heraeus, Panipol Oy, and Sigma-Aldrich (the last two materials), respectively, and used without further treatments. PEDOT:PSS coated PET film "Orgacon EL-350" was purchased from AGFA. TiO2 powder "Kronos 2300" was purchased from Kronos and used as opacifier in an electrolyte.

Spectrophotometer (Datacolor Mercury, aperture diameter of 6.5 mm for the illumination, aperture diameter of 2.5 mm for the measurement, SCE (specular component excluded) mode and D65/10 degrees illumination) was used to measure the color contrast based on the CIE L*a*b* color coordinates. Keithley SourceMeter 2400 and HP/Agilent 4155B Parameter Analyzer were used to apply DC voltages and evaluate current vs. voltage characteristics of the devices.

*Device preparation*

PEDOT:PSS-NFC and polyelectrolyte-NFC (transparent and opaque) were prepared by mixing the following formulations described in dry wt%: PEDOT:PSS-NFC <PEDOT:PSS / glycerol / NFC = 13.3 / 63.5 / 23.2>, transparent polyelectrolyte-NFC <PDADMAC / glycerol / NFC = 94.6 / 4.0 / 1.4>, opaque polyelectrolyte-NFC <PDADMAC / glycerol / TiO2 / NFC = 30.8 / 5.9 / 62.4 / 0.9>. Solutions of the different materials were mixed and dispersed using a Dispermill blender from ATP Engineering, about 5 ml of each mixture was then poured into plastic petri dishes with a diameter of 50 mm and finally dried in ambient condition for two days. On one of the polyelectrolyte-NFC, toluene-diluted PANI was drop cast and dried on one face (polyelectrolyte-NFC-PANI). Three different ECD structures were created by simple lamination of these hybridized films. The color switch contrast of each ECD was characterized by the spectrophotometer after connecting both electrodes to a DC power supply.

Thus, according to at least one aspect of the present inventive concept a reconfigurable sticker label electronics manufactured from nanofibrillated cellulose-based self-adhesive organic electronic materials is provided. This may be summarised in the following section.

Low voltage operated electronic devices, such as electrochromic displays, electrochemical transistors and electrolyte capacitors can be produced from electrically conducting polymers and polyelectrolytes. Here, we report how such polymers and polyelectrolytes can be casted together with nanofibrillated cellulose (NFC) derived from wood. The resulting films, which carry ionic or electronic functionalities, are all-organic, disposable, lightweight, flexible, self-adhesive, elastic and self-supporting. The mechanical and self-adhesive properties of the films enable us to achieve simple and flexible electronic systems by assembling the films into various kinds of components using a "cut and stick" method. Additionally, the self-adhesive surfaces provide us with a new concept that not only allows for simplified system integration of printed electronic components, but also allows for a unique possibility to detach and reconfigure one or several subcomponents by a "peel and stick" method to create yet another device configuration. This is demonstrated by a stack of two films that first served as the electrolyte layer and the pixel electrode of an electrochromic display, which then was detached from each other and transferred to another configuration, thus becoming the electrolyte and gate electrode of an electrochemical transistor. Further, smart pixels, consisting of the combination of one electrochromic pixel and one electrochemical transistor, have successfully been manufactured with the NFC-hybridized materials. The concept of system reconfiguration was further explored by that a pixel electrode charged to its colored state could be detached and then integrated on top of a transistor channel. This resulted in spontaneous discharging and associated current modulation of the transistor channel without applying any additional gate voltage. Our peel and stick approach promises for novel reconfigurable electronic devices, e.g. in sensor, label and security applications.

Embodiments of the inventive concept

Embodiment 1. A process for manufacturing at least a part of an electronic device, said process comprising the steps of:

providing a self-supporting layer which is ionically and/or electronically conducting and/or semiconducting and comprises a cellulose-based material;
forming a part of an electronic device with said self-supporting layer; wherein said self-supporting layer is at least one of the following: electrolyte, conductor, electrode, capacitor electrode, electrochromic electrode, gate electrode, transistor channel, sensor electrode;
wherein said self-supporting layer is self-adhesive.

Embodiment 2. A process for manufacturing at least a part of an electronic device according to embodiment 1, wherein said step of providing a self-supporting layer comprises the step of providing a self-supporting layer comprising at least one of the following: a polyelectrolyte, a conjugated polymer such as e.g. polypyrrole, PPy, polyaniline, PANI, a thiophene-based material, polythiophene or derivatives thereof e.g. (3,4-ethylenedioxythiophene), PEDOT, doped or not doped with poly(styrene sulfonate acid), PSS, or another conjugated polymer.

Embodiment 3. A process for manufacturing at least a part of an electronic device according to any one of the preceding embodiments, wherein said cellulose-based material at least partly is based on: nanofibrillated cellulose, NFC.

Embodiment 4. A process for manufacturing at least a part of an electronic device according to any one of the preceding embodiment s, wherein said self-supporting layer comprises glycerol, wherein said glycerol contributes to said self-supporting layer being self-adhesive.

Embodiment 5. A process for manufacturing at least a part of an electronic device according to any one of the preceding embodiments, wherein said self-supporting layer is a first self-supporting layer, and wherein the process further comprises the steps of:

providing a second layer which is ionically and/or electronically conducting and/or semiconducting, wherein said second layer is at least one of the following: electrolyte, conductor, electrode, capacitor electrode, electrochromic electrode, gate electrode, transistor channel, sensor electrode;
forming a part of an electronic device by arranging said first self-supporting layer on top of said second layer such that said first self-supporting layer is in ionic and/or electronic contact with said second layer, and wherein said first self-supporting layer and said second layer are forming parts of at least one of the following electronic devices: display, transistor, diode, battery, capacitor, solar cell, sensor.

Embodiment 6. A process for manufacturing at least a part of an electronic device according to embodiment 5, wherein said step of providing a second layer comprises the step of providing a second self-supporting layer comprising at least one of the following: a cellulose-based material, such as e.g. nanofibrillated cellulose, glycerol, thiophene-based material such as e.g. poly(3,4-ethylenedioxythiophene), PEDOT, doped or not doped with poly(styrene sulfonate acid), PSS, or other conjugated polymer systems such as polyaniline, PANI, or polypyrrole, PPy.
Embodiment 7. A process for manufacturing at least a part of an electronic device according to embodiment 5, the process further comprising the steps of:

providing a third layer which is ionically and/or electronically conducting and/or semiconducting, wherein said third layer is at least one of the following: electrolyte, conductor, electrode, capacitor electrode, electrochromic electrode, gate electrode, transistor channel, sensor electrode;
arranging said second layer in ionic and/or electronic contact with said first and said third layer; wherein said first layer comprises nanofibrillated cellulose, glycerol and PEDOT:PSS, said second layer comprises nanofibrillated cellulose, glycerol, polyelectrolyte and white $TiO_2$ pigment, and said third layer comprises nanofibrillated cellulose, glycerol and PEDOT:PSS; and
forming an electrochromic display by arranging said second layer between said first and said third layer.

Embodiment 8. A method for reconfiguration of an electronic system, comprising the steps of:

providing a self-supporting layer which is ionically and/or electronically conducting and/or semiconducting and comprises a cellulose-based material;
attaching said self-supporting layer to a first external layer such that said self-supporting layer is in ionic and/or electronic contact with said first external layer and thus together forming parts of a first electronic device;
detaching said self-supporting layer from said first external layer; and
attaching said self-supporting layer to a second external layer such that said self-supporting layer is in ionic and/or electronic contact with said second external layer and thus together forming parts of a second electronic device.

Embodiment 9. An electronic device layer comprising:

a self-supporting layer which is ionically and/or electronically conducting and/or semiconducting and comprises a cellulose-based material;
wherein said self-supporting layer is intended to be used as an active layer in at least one of the following: electrolyte, conductor, electrode, capacitor electrode, electrochromic electrode, gate electrode, transistor channel, sensor electrode;
and wherein said layer is self-adhesive.

Embodiment 10. An electronic system comprising:

a first self-supporting layer which is ionically and/or electronically conducting and/or semiconducting and comprises a cellulose-based material;
a second self-supporting layer which is ionically and/or electronically conducting and/or semiconducting and comprises a cellulose-based material;
wherein each one of, or either one of, said first and second self-supporting layers is intended to be used as an active layer in at least one of the following: electrolyte, conductor, electrode, capacitor electrode, electrochromic electrode, gate electrode, transistor channel, sensor electrode;
and wherein at least one of said first and second self-supporting layers is self-adhesive;
and wherein said first self-supporting layer is in ionic and/or electronic contact with said second self-supporting layer and thus together forming parts of at least one of the following electronic devices: display, transistor, diode, battery, capacitor, solar cell, sensor.

## Claims

1. A conductive layer comprising a mixture of:

   a conductive material being an active organic polymer material or an electrolyte;
   a cellulose based material for making said conductive layer self-supportive; and
   glycerol for making said conductive layer inherently self-adhesive,
   wherein said cellulose based material at least partly is based on nanofibrillated cellulose, NFC.

2. A conductive layer according to claim 1, comprising a protective layer covering at least a portion of a self-adhesive surface of said conductive layer.

3. A method for reconfiguration of an electronic system, comprising the steps of:

   providing a conductive layer according to claim 1, which is ionically and/or electronically conducting and/or semiconducting and comprises a cellulose-based material;
   attaching said conductive layer to a surface in order to arrange said conductive layer in ionic and/or electronic contact with said surface;
   detaching said conductive layer from said surface; and
   attaching said conductive layer to a electrical circuit in order to arrange said conductive layer in ionic and/or electronic contact with said electrical circuit and thus together forming parts of an electronic device.

4. An electronic system comprising:

   a first conductive layer according to claim 1, which is ionically and/or electronically conducting and/or semiconducting and comprises a cellulose-based material;
   a second conductive layer according to claim 1;
   wherein each one of, or either one of, said first and second conductive layers in use is an active layer in at least one of the following: a transistor channel, an electrolyte, a conductor, an electrode such as e.g. a capacitor electrode, an electrochromic electrode, a gate electrode, or a sensor electrode;
   and wherein said first conductive layer is in ionic and/or electronic contact with said second conductive layer and together form parts of at least one of the following electronic devices: display, transistor, diode, battery, capacitor, solar cell, sensor.

## Patentansprüche

1. Leitfähige Schicht, umfassend ein Gemisch aus:

   einem leitfähigen Material, wobei dieses ein aktives organisches polymeres Material oder ein Elektrolyt ist;
   ein auf Cellulose basierendes Material, um die leitfähige Schicht selbsttragend zu machen; und
   Glycerin, um die leitfähige Schicht inhärent selbstklebend zu machen,
   wobei das auf Cellulose basierende Material zumindest zum Teil auf nanofibrillierter Cellulose, NFC, basiert.

2. Leitfähige Schicht nach Anspruch 1, umfassend eine Schutzschicht, die zumindest einen Abschnitt einer selbstklebenden Oberfläche der leitfähigen Schicht bedeckt.

3. Verfahren zur Neukonfiguration eines elektronischen Systems, das die folgenden Schritte umfasst:

   Bereitstellen einer leitfähigen Schicht nach Anspruch 1, die ionisch und/oder elektronisch leitend und/oder halbleitend ist und ein auf Cellulose basierendes Material umfasst;
   Anbringen der leitfähigen Schicht auf einer Oberfläche, so dass die leitfähige Schicht in ionischem und/oder elektronischem Kontakt mit der Oberfläche angeordnet ist;
   Ablösen der leitfähigen Schicht von der Oberfläche; und

Anbringen der leitfähigen Schicht auf einer elektrischen Schaltung, so dass die leitfähige Schicht in ionischem und/oder elektronischem Kontakt mit der elektrischen Schaltung angeordnet ist, und wobei sie gemeinsam Teile einer elektronischen Vorrichtung bilden.

**4.** Elektronisches System, umfassend:

eine erste leitfähige Schicht nach Anspruch 1, die ionisch und/oder elektronisch leitend und/oder halbleitend ist und ein auf Cellulose basierendes Material umfasst;

eine zweite leitfähige Schicht nach Anspruch 1;

wobei jede einzelne oder irgendeine von der ersten und der zweiten leitfähigen Schicht in Anwendung eine aktive Schicht in mindestens einem der folgenden ist: einem Transistorkanal, einem Elektrolyt, einem Stromleiter, einer Elektrode, wie z.B. einer Kondensatorelektrode, einer elektrochromen Elektrode, einer Gateelektrode oder einer Sensorelektrode;

und wobei die erste leitfähige Schicht in ionischem und/oder elektronischem Kontakt mit der zweiten leitfähigen Schicht ist und diese gemeinsam Teile mindestens einer der folgenden elektronischen Vorrichtungen bilden: Anzeigevorrichtung, Transistor, Diode, Batterie, Kondensator, Solarzelle, Sensor.

## Revendications

**1.** Couche conductrice comprenant un mélange de :

un matériau conducteur étant un matériau polymère organique actif ou un électrolyte ;

matériau à base de cellulose pour rendre ladite couche conductrice autonome ; et

glycérol pour rendre ladite couche conductrice intrinsèquement auto adhésive,

dans laquelle ledit matériau à base de cellulose est au moins partiellement à base de la cellulose nano-fibrillée, NFC.

**2.** Couche conductrice selon la revendication 1, comprenant une couche protectrice recouvrant au moins une partie d'une surface auto-adhésive de ladite couche conductrice.

**3.** Procédé de reconfiguration d'un système électronique, comprenant les étapes consistant à :

former une couche conductrice selon la revendication 1, qui est conductrice et/ou semi-conductrice ioniquement et/ou électroniquement et qui comprend un matériau à base de cellulose ;

attacher ladite couche conductrice à une surface de façon à agencer ladite couche conductrice en contact ionique et/ou électronique avec ladite surface ;

détacher ladite couche conductrice de ladite surface ; et

attacher ladite surface conductrice à un circuit électrique de façon à agencer ladite couche conductrice en contact ionique et/ou électronique avec ledit circuit électronique et à ainsi former ensemble des parties d'un dispositif électronique.

**4.** Système électronique comprenant :

une première couche conductrice selon la revendication 1 qui est conductrice et/ou semi-conductrice ioniquement et/ou électroniquement et qui comprend un matériau à base de cellulose ;

une seconde couche conductrice selon la revendication 1 ;

dans lequel chacune desdites, ou l'une ou l'autre desdites, première et seconde couches conductrices en utilisation consiste en une couche active dans au moins un des éléments suivants : un canal de transistor, un électrolyte, un conducteur, une électrode telle que par exemple, une électrode de condensateur, une électrode électrochrome, une électrode de grille, ou une électrode sensorielle ;

et dans lequel ladite première couche conductrice est en contact ionique et/ou électronique avec ladite seconde couche conductrice et forment ensemble des parties d'au moins un des dispositifs électroniques suivants : affichage, transistor, diode, batterie, condensateur, cellule solaire, détecteur.

**Fig. 1a**  **Fig. 1b**  **Fig. 1c**

**Fig 2**

$V_G$

$- +$

Source electrode    Drain electrode

GND

$+ -$

$V_{DS}$    Gate electrode

ECT channel

☐ Patterned PEDOT:PSS surface on PET

▨ Bilayer of P:PSS-NFC and Plyte-NFC

**Fig. 3**

Fig. 4a

Fig. 4b

Fig. 5

Fig. 6

**Fig. 7**

Fig. 8

Fig. 9

**EP 2 800 102 B1**

**Patent documents cited in the description**

- US 2006102869 A1
- WO 2011042431 A1
- US 7012306 B2